# EUROPÄISCHE PATENTSCHRIFT

(11) **EP 2 089 586 B1**
(45) Veröffentlichungstag und Bekanntmachung des Hinweises auf die Patenterteilung: **01.06.2011**
(21) Anmeldenummer: 07847049.9
(22) Anmeldetag: 10.12.2007
(51) Int. Cl.: E04B 1/80

(54) **VERFAHREN ZUR HERSTELLUNG EINES VAKUUMPANEELS, DERARTIGES VAKUUMPANEEL SOWIE DEREN VERWENDUNG IN EINEM MAUERSTEIN.**
METHOD OF PRODUCING A VACUUM PANEL, ONE SUCH VACUUM PANEL, AND A MASONRY BLOCK USING SAID PANEL
PROCÉDÉ DE FABRICATION D'UN PANNEAU À VIDE INTÉRIEUR, PANNEAU À VIDE INTÉRIEUR AINSI OBTENU ET MAÇONNERIE RÉALISÉE À L'AIDE DE CE PANNEAU

(30) Priorität: 13.12.2006 DE 102006058804; 21.03.2007 DE 102007013584
(43) Veröffentlichungstag der Anmeldung: 19.08.2009
(73) Patentinhaber: Woschko Winlite GmbH, 74189 Weinsberg (DE); Rimmele KG, 89584 Ehingen (DE)
(72) Erfinder: WOSCHKO, Manfred, 74245 Löwenstein (DE); WOSCHKO, Donat, 74182 Obersulm (DE)
(74) Vertreter: Melzer, Wolfgang
(86) Internationale Anmeldenummer: PCT/EP2007/010758
(87) Internationale Veröffentlichungsnummer: WO 2008/071373

(56) Entgegenhaltungen:
- EP-A- 0 658 716
- EP-A- 1 308 570
- EP-A- 1 342 857
- EP-A- 1 475 486
- WO-A-94/15780
- WO-A-96/41048
- WO-A-98/01293
- DE-A1- 3 707 768
- DE-A1- 10 031 149
- DE-A1- 19 814 271
- DE-A1-102004 003 603
- US-A- 2 745 173
- US-A- 2 824 364
- US-A- 5 175 975
- US-A- 5 252 408

## Beschreibung

Die Erfindung betrifft Verfahren zur Herstellung eines im wesentlichen quaderförmigen Vakuumpaneels, ein nach den Verfahren hergestelltes Vakuumpaneel sowie die Verwendung eines solchen Vakuumpaneels bei einem wärmedämmenden mehrschaligen Mauerstein.

Wärmedämmungen auf der Basis von evakuierten Dämmplatten, sog. Vakuumpaneelen, sind als alternative Wärmedämmung insbesondere für Gebäude zunehmend in Diskussion.

Wesentlich bei derartigen Vakuumpaneelen ist der vakuumdichte Abschluss einer Füllung aus körnigen oder pulverförmigen entgasten Stützelementen, insbesondere Kieselsäure-Partikeln, nach außen, wobei das Innere evakuiert ist und wobei die Stützelemente eng aneinander gerückt sind. Typisch besteht ein solches Vakuumpaneel aus einer ein- oder mehrwandigen gasdichten Hülle und einer Füllung solcher Stützelemente, wobei das Innere der Hülle evakuiert ist, wobei die Stützelemente eng aneinander gerückt sind und von der Hülle eng anliegend umgeben sind. Derartige Vakuumpaneele sind in vielfältiger Form bereits bekannt, beispielsweise aus EP 0 106 103 A1, US 4,668,551 und WO 00/71849 A1.

Bereits frühzeitig ist erkannt worden, dass solche Vakuumpaneele in ihrem grundsätztichen konstruktiven Aufbau auch derart sein müssen, dass sie in rauem Betrieb in der Praxis insbesondere auf Baustellen ausreichend Widerstand gegen auch nur versehentliches Beschädigen entgegenbringen. Nach dem Stand der Technik ist es bekannt, eine gasdichte, im wesentlichen aus Kunststoff bestehende Hülle mit zusätzlichen Beschichtungen zu versehen, wie einer Metallfolie, insbesondere Aluminiumfolie (EP 1 557 504 A1). Insbesondere für eine Anwendung als Wärmedämmelement in einem mehrschaligen Mauerstein ist es darüber hinaus bekannt (EP 1 557 249 A1) die Schmalseiten des Quaders durch Wände eines Kunststoffrohrs mit rechteckigem Querschnitt zu definieren und die Endöffnungen durch einen Deckel gasdicht zu verschließen oder auch die Anordnung mit Kunststoffhülle und Füllung nach Evakuieren mit einem Kunststoffmaterial zu umgießen oder zu umspritzen. Wenngleich die bekannten Vorgehensweisen jedenfalls als Schritt in die richtige Richtung angesehen werden müssen, so können sie die eingangs genannten Probleme noch nicht vollständig überwinden, insbesondere auch unter Berücksichtigung der Tatsache, dass die Vakuumpaneele die wärmedämmende Wirkung über einen längeren Zeitraum beibehalten müssen. Bei Gebäudeanwendungen muss dabei an einen Zeitraum von etwa 30 Jahren und mehr gedacht werden. Document DE 10031149 A1 offenbart ein Vakuumpaneel, ein Verfahren zur Herstellung eines solchen Vakuumpaneels und deren Verwendung jeweils gemäß die Präambeln der Ansprüche 1, 11 und 21. Es ist somit Aufgabe der vorliegenden Erfindung, die Möglichkeit bereitzustellen, Vakuumpaneele zu schaffen, die bei vernünftigem wirtschaftlichem Aufwand fabrikmäßig herstellbar sind und diese Eigenschaft über längere Zeiträume auch bei rauem Betrieb beibehalten.

Die Aufgabe wird bei einem Verfahren zum Herstellen eines Vakuumpaneels durch die Merkmale des Anspruches 1 gelöst. Die Aufgabe wird durch ein Vakuumpaneel mit den Merkmalen des Anspruches 11 gelöst. Eine besondere Verwendung ist im Anspruch 21 gekennzeichnet.

Die Erfindung wird durch die Merkmale der abhängigen Ansprüche weitergebildet.

Für die vorliegende Erfindung ist wesentlich die Erkenntnis, dass die Flächen des Vakuumpaneels, die im praktischen Gebrauch mit den gegenseitig wärmezudämmenden Flächen in Kontakt kommen, durch ein Metallblech geschützt sind, während die häufig freiliegenden anderen Flächen aus Material niedriger Wärmeleitfähigkeit bestehen und zur Erhöhung der Lebensdauer ausrüstbar sind, um Permeabilitätsverluste (Abbau des Vakuums im Inneren des Vakuumpaneels) zu verhindern.

Die Erfindung wird anhand der in der Zeichnung dargestellten Ausführungsbeispiel näher erläutert. Es zeigen:
Fig. 12 einviertes Ausführungsbeispiel der Erfindung,
Fig. 15 ein siebtes Ausführungsbeispiel der Erfindung.

Im Folgenden wird die Erfindung erläutert, bei denen das Vakuumpaneel im Wesentlichen einem Quader mit quadratischer Grundfläche entspricht, dessen Dicke deutlich niedriger ist. Unter Dickenrichtung ist dabei die Richtung zu verstehen, in der zwei nicht dargestellte wärmezudämmende Elemente voneinander beabstandet sind und zwischen denen das Vakuumpaneel im Verwendungsfall anzuordnen ist.

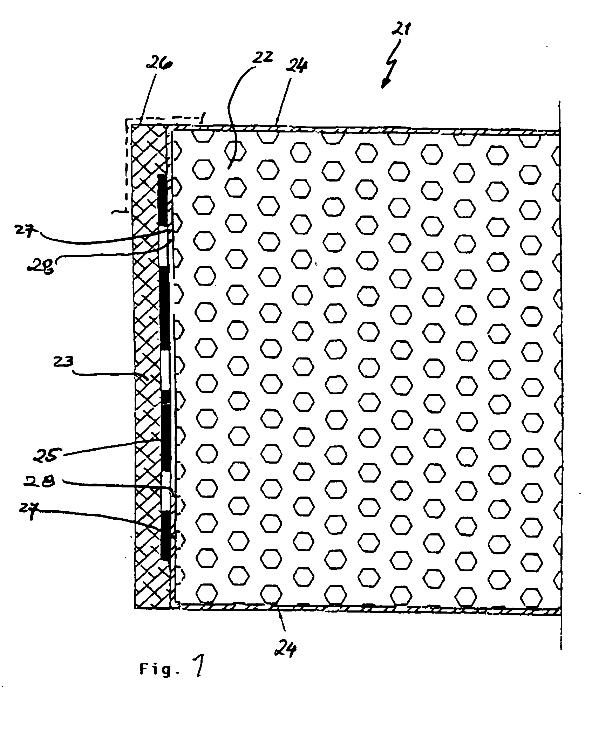

Gemäß Fig. 1 weist ein Vakuumpaneel 21 eine evakuierbare bzw. evakuierte Hülle auf, die weiter unten näher erläutert wird, mit einer Füllung 22 aus Stützelementen, nämlich aus körnigen oder pulverförmigen entgasten Stützelementen, wie insbesondere Kieselsäure-Partikeln. Die Hülle besteht aus einer umlaufenden sich in Dickenrichtung erstreckenden Kunststoffumrandung 23, die endseitig mit Metallblechen 24 abgeschlossen ist. Die Metallbleche 24 weisen zueinander gerichtete, im wesentlichen rechtwinklig umgebogene Ränder 27 auf, wobei deren Kanten 28 voneinander beabstandet sind. Diese umlaufenden Ränder 27 der Metallbleche 24 sind durch einen umlaufenden Klebestreifen 25 fest miteinander verbunden, und diese Anordnung ist von der Kunststoffumrandung 23 umlaufend vollständig so umgeben, dass das Innere, also der Bereich zwischen den Metallblechen 24 und dem Klebestreifen 25 gasdicht abgeschlossen ist. Das Material der Füllung 22 ist eng anliegend in die so definierte Hülle eingebracht. Das Innere der Hülle ist ferner evakuiert. Ferner weist die Hülle durch Strichlinien, schematisch und nur abschnittsweise dargestellt, eine die Hülle vollständig umgebende, vergleichsweise dünne Sperrschicht 26 auf. Wie weiter oben näher erläutert kann diese Sperrschicht 26 auf den Metallblechen 24 weggelassen sein, da diese Sperrschicht 26 als Permeationssperrschicht dient und die Metallbleche 24 möglicherweise bereits von ihrem Material her ausreichend permeationsdicht sind, beispielsweise weil es sich um Aluminiumblech handelt.

Der Klebestreifen 25 dient zur Lagefixierung der Metallbleche 24 bei der Herstellung, aber auch bei dem hergestellten Vakuumpaneel 21. Der Klebestreifen 25 muss daher selbst nicht gasdicht sein.

Es ist jedoch zweckmäßig den Klebestreifen 25 aus einem Material vorzusehen, durch das der Klebestreifen 25 als Permeations-Sperre wirkt, deren Funktion weiter unten erläutert wird, so dass im Zusammenwirken mit dem Material der Metallbleche 24 abhängig von den Bedingungen eine Sperrschicht 26 nicht (mehr) erforderlich ist. Es sind verschiedene Möglichkeiten denkbar, das Innere der Hülle zu evakuieren.

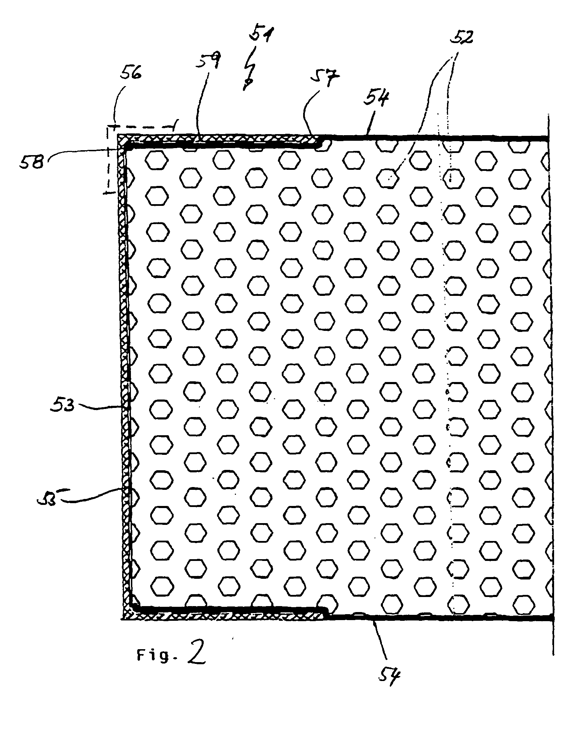

Gemäß Fig. 2 weist ein Vakuumpaneel 51 eine evakuierbare bzw. evakuierte Hülle auf, die weiter unter näher erläutert wird, mit einer Füllung 52 aus Stützelementen, nämlich aus körnigen oder pulverförmigen, entgasten Stützelementen, wie insbesondere Kieselsäure-Partikeln. Die Hülle besteht aus einer umlaufenden, sich in Dickenrichtung erstreckenden Kunststoffumrandung 53, die endseitig mit Metallblechen 54 abgeschlossen ist. Die Metallbleche 54 weisen umlaufende, im Wesentlichen abgerundete Ränder 58 auf, wobei diese Ränder 58 der beiden Metallbleche 54 voneinander beabstandet sind. Diese Abrundungen 58 können auch durch eine geringfügige Abkantung bewirkt sein. Diese umlaufenden Ränder 58 der Metallbleche 54 sind durch einen umlaufenden Klebestreifen 55 fest miteinander verbunden, wobei der Klebestreifen 55 um die Ränder 58 gelegte Randbereiche 59 aufweist, die im Bereich der Metallbleche 54 angeklebt sind. Zweckmäßig kann jedes Metallblech 54 in diesem Bereich eine Umfangsabbiegung 57 aufweisen in der der Randbereich 59 des Klebestreifens 55 aufgeklebt ist. Diese Anordnung ist von der Kunststoffumrandung 53 umlaufend vollständig so umgeben, dass das Innere, also der Bereich zwischen den Metallblechen 54 und den Klebestreifen 55, gasdicht abgeschlossen ist. Zweckmäßig ist dabei die Umfangsabbiegung 57 und die Dicke der Kunststoffumrandung 53 in diesem Bereich so bemessen, dass die Außenseite der Kunststoffumrandung 53 mit der Außenseite des Metallbleches 54 im Wesentlichen in einer Ebene liegt. Das Material der Füllung 55 ist enganliegend in die so definierte Hülle eingebracht. Das Innere der Hülle ist ferner evakuiert. Ferner weist die Hülle durch Strichlinien, schematisch und nur abschnittsweise dargestellt, eine die Hülle vollständig umgebende, vergleichsweise dünne Sperrschicht 56 auf. Wie weiter oben bereits näher erläutert kann diese Sperrschicht auf den Metallblechen 54 weggelassen sein, da diese Sperrschicht 56 als Permeations-Sperrschicht dient und die Metallbleche 54 möglicherweise bereits von ihrem Material her ausreichend permeationsdicht sind, beispielsweise weil es sich um Aluminiumblech handelt.

Wie bereits bei dem Ausführungsbeispiel gemäß Figur 1 erläutert, dient der Klebestreifen 55 zur Lagefixierung und muss daher selbst nicht gasdicht sein, ist jedoch zweckmäßig aus einem Material, das als Permeations-Sperre wirken kann. Das Innere der Hülle kann evakuiert werden bzw. evakuiert sein.

## Patentansprüche

1. Verfahren zur Herstellung eines im Wesentlichen quaderförmigen Vakuumpaneels (21, 51), das nach außen gasdicht in einer Hülle eine Füllung aus Stützelementen (22, 52) aufweist, wobei das Innere der Hülle evakuiert wird, wobei zur Bildung von zwei voneinander abgewandten Seiten der Hülle jeweils ein Metallblech (24, 54) angeordnet wird, zwischen denen die Stützelemente (22, 35) angeordnet werden, wobei die umlaufenden Ränder der Metallbleche beabstandet werden wobei die Stützelemente körnige oder pulverförmige entgaste Stützelemente sind, insbesondere Kieselsäurepartikel, wobei bei der Evakuierung der Hülle die Stützelemente eng aneinander gerückt sind, und die Ränder durch Umspritzen bzw. Umgießen mit einem Kunststoffmantel formschlüssig umhüllt werden,
**dadurch gekennzeichnet,**
**dass** die umlaufenden Ränder (27, 58) beider Metallbleche (24, 54) durch einen verbindenden Klebestreifen (25, 55) abgeklebt und miteinander verbunden werden, wobei die Ränder (27, 58) außenseitig durch den Klebestreifen (25, 55) abgeklebt und miteinander verbunden werden und mit den Rändern (27) der Klebestreifen (25, 55) durch das Umspritzen bzw. Umgießen mit dem Kunststoffmaterial formschlüssig umhüllt werden.

2. Verfahren nach Anspruch 1,
**dadurch gekennzeichnet,**
**dass** die Evakuierung durch eine Öffnung (8) in einem der Bleche (4) erfolgt, die nach der Evakuierung durch einen Verschluss (9) gasdicht verschlossen wird.

3. Verfahren nach Anspruch 1,
**dadurch gekennzeichnet,**
**dass** die Evakuierung durch eine Öffnung (11) in der Umspritzung bzw. Umgießung (3) erfolgt, die nach der Evakuierung durch Einkleben eines Kunststoffstopfens (2) gasdicht verschlossen wird.

4. Verfahren nach einem der Ansprüche 1 bis 3,
**dadurch gekennzeichnet,**
**dass** die Anordnung aus Blechen (24) und Stützelementen (22) in eine Form eingebracht wird, die Form evakuiert wird, und die Umspritzung bzw. Umgießung (23) in der evakuierten Form erfolgt.

5. Verfahren nach Anspruch 1,
**dadurch gekennzeichnet,**
**dass** der Klebestreifen (25, 55) aus einem Material besteht oder so ausgerüstet wird, dass er Permeations-Sperrwirkung, insbesondere in der gleichen Größenordnung wie die des Materials der Metallbleche (24, 54), besitzt.

6. Verfahren nach Anspruch 1 oder Anspruch 5,
**dadurch gekennzeichnet,**
**dass** der Klebestreifen (53) um die Ränder (58) herum in den Bereich der Ebene der Metallbleche (54) geführt ist.

7. Verfahren nach einem der Ansprüche 1 bis 6,
**dadurch gekennzeichnet,**
**dass** zueinander weisende Ränder (27) im Wesentlichen rechtwinklig umgebogen sind, oder deren Kanten im Wesentlichen lediglich abgerundet sind.

8. Verfahren nach einem der Ansprüche 1 bis 7,
**dadurch gekennzeichnet,**
**dass** anschließend zumindest auf der Umspritzung bzw. Umgießung (23, 53) bzw. den Blechen eine Permeations-Sperrschicht (26, 36, 46, 56) aus einem Material geringer Wärmeleitfähigkeit und geringem Permeationsvermögens aufgebracht wird.

9. Verfahren nach Anspruch 8,
**dadurch gekennzeichnet,**
**dass** eine Aluminiumschicht aufgebracht, insbesondere aufgedampft oder aufgesputtert wird oder eine quarzähnliche Schicht auf Basis von HMDS oder dergleichen aufgebracht wird.

10. Verfahren nach einem der Ansprüche 1 bis 9,
**dadurch gekennzeichnet,**
**dass** zwischen den Stützelementen (22, 32, 42, 52) Getter-Materialen, zum Beispiel in Pillenform vorgesehen werden, die nach der Evakuierung, gegebenenfalls nach Aufbringung der Permeations-Sperrschicht (26, 36, 46, 56) aktiviert werden.

11. Vakuumpaneel (21, 51) mit im Wesentlichen quaderförmiger Gestalt, insbesondere für Wärmedämmzwecke, bestehend aus einer nach außen gasdichten Hülle mit einer Füllung aus Stützelementen (22, 52), wobei das Innere der Hülle evakuiert ist, wobei zur Bildung von zwei voneinander abgewandten Seiten der Hülle jeweils ein Metallblech (24, 54) vorgesehen ist, zwischen denen die Stützelemente angeordnet sind, wobei die umlaufenden Ränder der Metallbleche beabstandet sind wobei die Stützelemente körnige oder pulverförmige entgaste Stützelemente sind, insbesondere Kieselsäure-Partikel und bei der Evakuierung der Hülle die Stützelemente eng aneinandergerückt sind und von der Hülle umgeben sind und die Ränder durch eine Umspritzung oder Umgießung eines Kunststoffmaterials formschlüssig umhüllt sind,
**dadurch gekennzeichnet,**
**dass** die Ränder durch den Klebestreifen (25, 55) außenseitig abgeklebt und miteinander verbunden sind und der Klebestreifen (25, 55) und die Ränder (27, 57) durch die Umspritzung oder Umgießung (23, 53) mit dem Kunststoffmaterial formschlüssig umhüllt sind.

12. Vakuumpaneel nach Anspruch 11,
**dadurch gekennzeichnet,**
**dass** mindestens eines der Metallbleche mindestens eine Evakuierungs-Öffnung (8) aufweist, die nach der Evakuierung durch einen Verschluss (9) gasdicht verschlossen ist.

13. Vakuumpaneel nach Anspruch 11,
**dadurch gekennzeichnet,**
**dass** die Umspritzung bzw. Umgießung mindestens eine Evakuierungs-Öffnung (11) aufweist, die nach der Evakuierung durch Einkleben eines Kunststoffstopfens (12) gasdicht verschlossen ist.

14. Vakuumpaneel nach einem der Ansprüche 11 bis 13,
**dadurch gekennzeichnet,**
**dass** der Klebestreifen (25, 55) aus einem Material besteht oder so ausgerüstet ist, dass er Pemleations-Sperrwirkung, insbesondere in der gleichen Größenordnung wie die des Materials der Metallbleche (24, 54), besitzt.

15. Vakuumpaneel nach Anspruch 14,
**dadurch gekennzeichnet,**
**dass** der Klebestreifen (55) um die Ränder (58) herum in den Bereich der Metallbleche (54) geführt ist.

16. Vakuumpaneel nach einem der Ansprüche 11 bis 15,
**dadurch gekennzeichnet,**
**dass** die zueinander weisenden Ränder (27) im Wesentlichen rechtwinklig umgebogen sind oder im Wesentlichen lediglich abgerundet sind.

17. Vakuumpaneel nach Anspruch 11,
**dadurch gekennzeichnet,**
**dass** die umlaufenden Ränder eine Abkantung (27) aufweisen, die bei den beiden Blechen (24) zueinander weist.

18. Vakuumpaneel nach einem der Ansprüche 11 bis 17,
**dadurch gekennzeichnet,**
**dass** zumindest auf einem von Metallblech und Umspritzung bzw. Umgießung eine Permeations-Sperrschicht (26, 36, 46, 56) aus einem Material geringer Wärmeleitfähigkeit aufgebracht ist.

19. Vakuumpaneel nach Anspruch 18,
**dadurch gekennzeichnet,**
**dass** die Permeations-Sperrschicht durch eine Aluminiumschicht gebildet ist, die aufgedampft oder aufgesputtert ist oder durch eine quarzähnliche Schicht auf Basis von HMDS oder dergleichen gebildet ist.

20. Vakuumpaneel nach einem der Ansprüche 11 bis 19,
**dadurch gekennzeichnet,**
**dass** zwischen den Stützelementen (32, 42) Getter-Materialien zum Beispiel in Pillenform vorgesehen sind, die von außerhalb der Hülle aktivierbar sind.

21. Verwendung eines Vakuumpaneels nach einem der Ansprüche 11 bis 20 bei einem wärmedämmenden mehrschaligen Mauerstein, bei dem eine Innenschale, eine Außenschale und eine durch das Vakuumpaneel gebildete Wärmedämmung zwischen Innenschale und Außenschale miteinander verbunden sind, wobei die Metallbleche an den zugewandten Flächen der Innenschale bzw. der Außenschale anliegen.

## Claims

1. Method for producing a substantially cuboid vacuum panel (21, 51), which comprises in a casing gastight to the outside a filling of support elements (22, 52), wherein the inside of the casing is evacuated, wherein metal sheets (24, 54), between which the support elements (22, 35) are provided, are respectively arranged to form two sides of the casing facing away from each other, wherein the circumferential rims of the metal sheets are spaced apart, the support elements are granular or powdery degassed support elements, particularly silicic acid particles, wherein at the evacuation of the casing the support elements are moved closely together, and the rims are interlockingly enclosed with a plastic coating by overmolding or recasting, respectively
**characterized in that**
the circumferential rims (27, 58) of both metal sheets (24, 54) are connected to each other by a connecting adhesive strip (25, 55), wherein the rims (27, 58) are masked and connected to each other by the adhesive strip (25, 55) on the outside, and are interlockingly enclosed with the rims (27) of the adhesive strip (25, 55) by the overmolding or recasting, respectively.

2. Method according to claim 1,
**characterized in that**
the evacuation is made through an opening (8) in one of the metal sheets (4), which is closed off to be gastight by a cap (9) after the evacuation.

3. Method according to claim 1,
**characterized in that**
the evacuation is made through an opening (11) in the overmold or recast (3), respectively, which is closed off to be gastight after the evacuation by sticking in a plastic plug (2).

4. Method according to one of the claims 1 to 3,
**characterized in that**
the arrangement of metal sheets (24) and support elements (22) is introduced into a form, the form is evacuated, and the overmolding or recasting, respectively, takes place in the evacuated form.

5. Method according to claim 1,
**characterized in that**
the adhesive strip (25, 55) consists of a material or is equipped in a way, so that it has the effect of a permeation barrier, in particular of the same magnitude as the one of the material of the metal sheets (24, 54).

6. Method according to claim 1 or claim 5,
**characterized in that**
the adhesive strip (53) is guided around the rims (58) into the region of the plane of the metal sheets (54).

7. Method according to one of the claims 1 to 6,
**characterized in that**
rims (27) facing towards each other are bent substantially rectangular, or the edges thereof are just substantially rounded.

8. Method according to one of the claims 1 to 7,
**characterized in that**
subsequently at least on the overmold or recast (23, 53), respectively, the metal sheets are applied with a permeation barrier layer (26, 36, 46, 56) made of a material, which has a lower thermal conductivity and a lower permeation ability.

9. Method according to claim 8,
**characterized in that**
an aluminum layer is applied, in particular is evaporated or sputtered, or that a quartz like layer on the basis of HMDS or the like is applied.

10. Method according to one of the claims 1 to 9,
**characterized in that**
between the support elements (22, 32, 43, 52) getter materials, for example in pill shape, are provided, which are, if necessary, activated after applying the permeation barrier layer (26, 36, 46, 56).

11. Vacuum panel (21, 51) with a substantially cuboid shape, in particular for insulation purposes, which consists of a casing gastight to the outside with a filling of support elements (22, 52), wherein the inside of the casing is evacuated, wherein metal sheets (24, 54), between which the support elements (22, 35) are provided, are respectively provided to form two sides of the casing facing away from each other, wherein the circumferential rims of the metal sheets are spaced apart, wherein the support elements are granular or powdery degassed support elements, particularly silicic acid particles, and at the evacuation of the casing the support elements are moved closely together, and the rims are interlockingly enclosed with a plastic coating by an overmold or recast,
**characterized in that**
the rims are masked by the ashesive strip (25, 35) on the outside and are connected to each other, and the adhesive strip (25, 55) and the rims (27, 57) are interlockingly enclosed with the plastic material by the overmold or recast (23, 53).

12. Vacuum panel according to claim 11,
**characterized in that**
at least one of the metal sheets comprises an evacuation opening (8), which is closed off to be gastight by a cap (9) after the evacuation.

13. Vacuum panel according to claim 11,
**characterized in that**
the overmold or recast, respectively, comprises at least one evacuation opening (11), which is closed off to be gastight after the evacuation by sticking in a plastic plug (12).

14. Vacuum panel according to one of the claims 11 to 13,
**characterized in that**
the adhesive strip (25, 55) consists of a material or is equipped in a way, so that it has the effect of a permeation barrier, in particular of the same magnitude as the one of the material of the metal sheets (24, 54).

15. Vacuum panel according to claim 14,
**characterized in that**
the adhesive strip (55) is guided around the rims (58) into the region of the plane of the metal sheets (54).

16. Vacuum panel according to one of the claims 11 to 15,
**characterized in that**
the rims (27) facing towards each other are bent substantially rectangular, or the edges thereof are just substantially rounded.

17. Vacuum panel according to claim 11,
**characterized in that**
the circumferential rims comprise a fold (27), which faces towards each other at both metal sheets (24)

18. Vacuum panel according to one of the claims 11 to 17,
**characterized in that**
at least on one of the metal sheets and the overmold or recast, respectively, a permeation barrier layer (26, 36, 46, 56) of a material, which has a lower thermal conductivity and a lower permeation property, is applied.

19. Vacuum panel according to claim 18,
**characterized in that**
the permeation barrier layer is formed by an aluminum layer, which is evaporated or sputtered, or is formed by a quartz like layer on the basis of HMDS or the like.

20. Vacuum panel according to one of the claims 11 to 19,
**characterized in that**
between the support elements (22, 32, 43, 52) getter materials, for example in pill shape, are provided, which can be activated from outside the casing.

21. Use of a vacuum panel according to one of the claims 11 to 20 with a heat insulating multi-shelled brick, for which an inner shell, an outer shell and a heat insulation, formed by the vacuum panel between the inner shell and the outer shell, are connected to each other, wherein the metal sheets are fit to the facing surfaces of the inner shell and the outer shell, respectively.

## Revendications

1. Procédé pour la fabrication d'un panneau à vide intérieur (21, 51) essentiellement en forme parallélépipédique, qui comprend, disposé de façon étanche aux gaz vers l'extérieur dans une enveloppe, un remplissage d'éléments de soutien (22, 52), et l'intérieur de l'enveloppe est évacué, et pour former deux côtés, détournés l'un de l'autre, de l'enveloppe, on agence une tôle métallique (24, 54) respective, entre lesquelles sont agencés les éléments de soutien (22, 35), les bordures périphérique des tôles métalliques sont écartées et les éléments de soutien sont des éléments de soutien dégazés en forme de grains ou en forme de poudre, en particulier des particules d'acide silicique, dans lequel, lors de l'évacuation de l'enveloppe, les éléments de soutien sont intimement rapprochés les uns des autres, et les bordures sont enveloppées par coopération de formes avec un manteau en matière plastique, par enrobage par injection ou par coulée,
**caractérisé en ce que** les bordures périphérique (27, 58) des deux tôles métalliques (24, 54) sont collées et reliées l'une à l'autre par un ruban collant de liaison (25, 55), et les bordures (27, 58) sont collés et reliées l'une à l'autre du côté extérieur par le ruban collant (25, 55) et sont enveloppées avec les bordures (27) des rubans collants (25, 55) en coopération de formes par la matière plastique par enrobage par injection ou par coulée.

2. Procédé selon la revendication 1,
**caractérisé en ce que** l'évacuation a lieu à travers une ouverture (8) dans l'une des tôles (4), ouverture qui est refermée de manière étanche aux gaz après l'évacuation par un obturateur (9).

3. Procédé selon la revendication 1,
**caractérisé en ce que** l'évacuation a lieu à travers une ouverture (11) dans l'enrobage (3), ouverture qui est refermée de manière étanche aux gaz après évacuation par collage d'un bouchon en matière plastique (2).

4. Procédé selon l'une des revendications 1 à 3,
**caractérisé en ce que** l'agencement formé des tôles (24) et des éléments de soutien (22) est introduit dans un moule, le moule est évacué, et l'enrobage par injection ou par coulée (23) a lieu dans le moule évacué.

5. Procédé selon la revendication 1,
**caractérisé en ce que** le ruban collant (25, 55) est réalisé en un matériau, ou est traité de telle façon qu'il possède un effet de barrage vis-à-vis de la perméation, en particulier du même ordre de grandeur que celui du matériau des tôles métalliques (24, 54).

6. Procédé selon la revendication 1 ou 5,
**caractérisé en ce que** le ruban collant (53) est passé tout autour des bordures (58) dans la région du plan des tôles métalliques (54).

7. Procédé selon l'une des revendications 1 à 6,
**caractérisé en ce que** des bordures (27) tournées l'une vers l'autre sont recourbées essentiellement en angle droit, ou bien **en ce que** leurs arêtes sont sensiblement uniquement arrondies.

8. Procédé selon l'une des revendications 1 à 7,
**caractérisé en ce que** l'on rapporte ensuite, au moins sur l'enrobage par injection ou par coulée (23, 53), ou encore sur les tôles, une couche de blocage de perméation (26, 36, 46, 56) en un matériau de plus faible conductivité thermique et ayant une capacité de perméation moindre.

9. Procédé selon la revendication 8,
**caractérisé en ce qu'**une couche d'aluminium est appliquée, en particulier par vaporisation ou par pulvérisation, ou bien **en ce que** l'on applique une couche analogue à du quartz, à base de HMDS ou similaire.

10. Procédé selon l'une des revendications 1 à 9,
**caractérisé en ce que** l'on prévoit entre les éléments de soutien (22, 32, 42, 52), des matériaux dits "getter", par exemple sous forme de pastilles qui sont activées après l'évacuation, le cas échéant après application de la couche de blocage de perméation (26, 36, 46, 56).

11. Panneau à vide intérieur (21, 51) avec une configuration essentiellement parallélépipédique, en particulier à des fins d'isolation thermique, constitué d'une enveloppe étanche aux gaz vers l'extérieur avec un remplissage d'éléments de soutien (22, 52), dans lequel l'intérieur de l'enveloppe est évacué, et pour former deux côtés, détournés l'un de l'autre, de l'enveloppe, il est prévu respectivement une tôle métallique (24, 54), entre lesquelles sont agencés les éléments de soutien, et les bordures périphériques des tôles métalliques sont écartées et les éléments de soutien sont des éléments de soutien dégazés en forme de grains ou en forme de poudre, en particulier des particules d'acide silicique et, lors de l'évacuation de l'enveloppe, les éléments de soutien sont rapprochés intimement les uns des autres et sont entourés par l'enveloppe, et les bordures sont enveloppées en coopération de formes par enrobage par injection ou par coulée d'une matière plastique,
**caractérisé en ce que** les bordures sont collées et reliées l'une à l'autre du côté extérieur par le ruban collant (25, 55), et le ruban collant (25, 55) et les bordures (27, 57) sont enveloppé(e)s en coopération de formes avec la matière plastique par l'enrobage par injection ou par coulée (23, 53).

12. Panneau à vide intérieur selon la revendication 11,
**caractérisé en ce que** l'une au moins des tôles métalliques comporte au moins une ouverture d'évacuation (8) qui est refermée de manière étanche aux gaz après l'évacuation par un obturateur (9).

13. Panneau à vide intérieur selon la revendication 11,
**caractérisé en ce que** l'enrobage par injection ou par coulée comporte au moins une ouverture d'évacuation (11) qui, après évacuation, est refermée de manière étanche aux gaz par collage d'un bouchon en matière plastique (12).

14. Panneau à vide intérieur selon l'une des revendications 11 à 13, **caractérisé en ce que** le ruban collant (25, 55) est réalisé en un matériau, ou est traité de telle façon qu'il possède un effet de blocage vis-à-vis de la perméation, en particulier du même ordre de grandeur que celui du matériau des tôles métalliques (24, 54).

15. Panneau à vide intérieur selon la revendication 14,
**caractérisé en ce que** le ruban collant (55) est passé tout autour des bordures (58) dans la région des tôles métalliques (54).

16. Panneau à vide intérieur selon l'une des revendications 11 à 15,
**caractérisé en ce que** les bordures (27) tournées l'une vers l'autre sont recourbées sensiblement à angle droit ou sont sensiblement simplement arrondies.

17. Panneau à vide intérieur selon la revendication 11,
**caractérisé en ce que** les bordures périphériques comportent un chanfrein (27), lesquels sont tournés l'un vers l'autre dans les deux tôles (24).

18. Panneau à vide intérieur selon l'une des revendications 11 à 17,
**caractérisé en ce qu'**une couche de blocage de perméation (26, 36, 46, 56), en un matériau de plus faible conductivité thermique est appliquée sur l'un des éléments que sont les tôles métalliques et l'enrobage.

19. Panneau à vide intérieur selon la revendication 18,
**caractérisé en ce que** la couche de blocage de perméation est formée par une couche d'aluminium, qui est appliquée par vaporisation ou par pulvérisation, ou qui est formée par une couche analogue à du quartz, à base de HMDS ou similaire.

20. Panneau à vide intérieur selon l'une des revendications 11 à 19,
**caractérisé en ce que** des matériaux dits "getter", par exemple sous forme de pastilles, sont prévus entre les éléments de soutien (32, 42), lesquels peuvent être activés à l'extérieur de l'enveloppe.

21. Utilisation d'un panneau à vide intérieur selon l'une des revendications ont 11 à 20 dans une brique à plusieurs coques et à effet d'isolation thermique, dans laquelle une coque intérieure, une coque extérieure, et une isolation thermique formée par le panneau à vide intérieur sont reliées les unes aux autres entre la coque intérieure et la coque extérieure, dans laquelle les tôles métalliques sont appliquées contre les surfaces en vis-à-vis de la coque intérieure et de la coque extérieure.
